# EUROPEAN PATENT APPLICATION

(11) **EP 4 624 500 A1**
(43) Date of publication of application: **01.10.2025**
(21) Application number: 24166644.5
(22) Date of filing: 27.03.2024
(51) Int. Cl.: C08B 1/00, C08B 1/02, C08B 3/00, C08L 1/10

(54) **CELLULOSE ACYL GLYCOLATES AND METHOD FOR PRODUCING SAME**

(71) Applicant: Tallinn University of Technology, 19086 Tallinn (EE)
(72) Inventor: Krumme, Andres, 19086 Tallinn (EE); Parve, Omar, 19086 Tallinn (EE); Parve, Jaan, 19086 Tallinn (EE); Krasnou, Illia, 19086 Tallinn (EE)
(74) Representative: Moosedog Oy

(57) **Abstract**

A method for producing cellulose acyl glycolates, the method comprising: combining cellulose as a reactant, a basic catalyst and an aprotic polar solvent to form a reactant mixture; stirring and heating the reactant mixture for a first period of time; adding a 2-oxo-2-(vinyloxy)ethyl ester as a reagent to the stirred and heated reactant mixture to form a reaction mixture; stirring and heating the reaction mixture for a second period of time for formation of cellulose acyl glycolates. Disclosed are also cellulose acyl glycolates, wherein the acyl groups are linked to cellulose hydroxyl groups via glycolic acid moiety.

## Description

### TECHNICAL FIELD

The present disclosure relates to cellulose acyl glycolates and method for producing the same.

### BACKGROUND

Depletion of fossil resources and growing environmental problems have prompted the reorientation of chemical industries towards the use of biological raw materials, such as cellulose and plant oils. Cellulose has been called "a fascinating biopolymer" and it is the most abundant sustainable material. Raw cellulose is not thermoplastic in its natural state. To overcome this shortcoming, cellulose needs to be derivatized with compounds donating long-chain hydrophobic structural fragments to cellulose (for instance, fatty acids - obtainable from plant oil triglycerides). In addition, it is important to be able to derivatize cellulose with a wide variety of functional structural fragments in order to produce cellulose-based materials with certain functional properties.

One of the most common approaches to derivatize cellulose is acylation of the macromolecules, thus turning cellulose hydroxyl groups into ester groups. Resulting derivatives lose the intra- and intermolecular hydrogen bonding characteristic of cellulose and become thermoplastic. Cellulose esters with longer aliphatic moieties, ranging in size from C3 and longer, exhibit plasticized polymer behavior.

Acylation of cellulose has been performed in homogeneous systems as well as in heterogeneous ones and catalyzed by acidic or basic catalysts using different acylating reagents. Regarding design of a novel acylation method for the synthesis of cellulose fatty acid esters, the designer has one free option - the choice of certain type of starting cellulose characterized by its degree of polymerization, which may differ by orders of magnitude for cellulose samples with different preparation history. The choice of cellulose preparation influences the range of the most important features of the novel acylation method which are the reaction medium, type of acylating reagent, and catalyst.

The synthesis of many vinyl esters intended for cellulose acylation require the use of rare metal catalysts affording products with lower than quantitative yields. Acid chlorides, in turn, are less favorable in many cases because of forming corrosive hydrochloric acid setting certain requirements to reaction equipment (reactors, extruders etc.). Alkyl esters like triglycerides of plant oils are much less active than the above mentioned reagents and therefore they have been described to react at higher temperatures (above 180° C) and during much longer times which is a significant shortcoming.

Therefore, in light of the foregoing discussion, there exists a need to overcome the aforementioned drawbacks associated with preparing novel materials from cellulose and plant oils.

### SUMMARY

The aim of the present disclosure is to provide cellulose acyl glycolates, wherein the acyl groups are linked to cellulose hydroxyl groups via glycolic acid moiety and a method for producing cellulose acyl glycolates. Advantageous features are set out in the appended dependent claims.

Embodiment of the present disclosure provides novel cellulose acyl glycolates, wherein the acyl groups are linked to cellulose hydroxyl groups via glycolic acid moiety. Furthermore, embodiments disclose a method to produce also such cellulose acyl glycolates in which only biobased moieties are involved: cellulose, fatty acids of plant oils and glycolic acid - providing a considerably green approach to produce biopolymers with various applications.

Additional aspects, advantages, features and objects of the present disclosure would be made apparent by the detailed description of the illustrative embodiments construed in conjunction with the appended claims that follow.

### DETAILED DESCRIPTION OF EMBODIMENTS

The following detailed description illustrates embodiments of the present disclosure and ways in which they can be implemented.

In a first aspect, an embodiment of the present disclosure provides a method for producing cellulose acyl glycolates, the method comprising:
- combining cellulose as a reactant, a basic catalyst and an aprotic polar solvent to form a reactant mixture;
- stirring and heating the reactant mixture for a first period of time;
- adding a 2-oxo-2-(vinyloxy)ethyl ester as a reagent to the stirred and heated reactant mixture to form a reaction mixture;
- stirring and heating the reaction mixture for a second period of time for formation of cellulose acyl glycolates.

In a second aspect, an embodiment of the present disclosure provides cellulose acyl glycolates, wherein the acyl groups are linked to cellulose hydroxyl groups via glycolic acid moiety.

The technical effect of the abovementioned derivatization method is that it alters the properties of cellulose, producing material which is more amenable to various applications in industries such as pharmaceuticals, textiles, and coatings.

Cellulose is a linear polymer in which anhydroglucose units (AGU) are linked by β-1,4-glucosidic bonds (Formulae 1); it is a major component of plant cell walls and provides structural support to plants. An AGU involves three hydroxyl groups: the primary OH on C(6) and secondary OHs on C(2) and C(3). The degree of substitution of the hydroxyl groups (DS) values of derivatives are generally needed to be between 1 and 3 in order to provide cellulose thermoplasticity or other target functional properties.

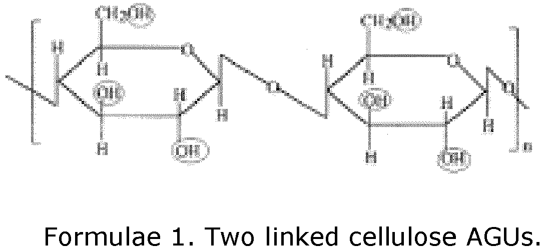

Basic catalyst needs to be introduced into the reaction mixture for aiding replacement of the hydrogen atoms of cellulose hydroxyl groups with acyl moieties. The hydroxyl groups on cellulose act as nucleophiles (electron-rich centers) in the esterification reaction. The choice of catalyst depends strongly on the solvent system used. The basic catalyst accelerates the reaction helping to overcome kinetic barriers by facilitating the deprotonation of cellulose and promoting the reaction between cellulose and an acylating reagent.

Aprotic polar solvents as one option for reaction medium are important part of the method providing a suitable reactant mixture for the method. Cellulose is often insoluble or poorly soluble in common protic solvents, which contain hydrogen atoms directly bonded to electronegative atoms. Aprotic polar solvents, which lack acidic hydrogen atoms participate in dissolution of cellulose and the reagents more effectively. This contribution to cellulose solubility ensures that the components in the reaction mixture are in closer contact, promoting the acylation reaction.

2-Oxo-2-(vinyloxy)ethyl ester is used as a reagent to acylate cellulose. 2-Oxo-2-(vinyloxy)ethyl esters have not been used previously for acylation of cellulose. The synthesis of 2-oxo-2-(vinyloxy)ethyl esters is technically simple and, in many cases, high-yielding, best results have been obtained for long-chain fatty acids, the crude products can be used for acylation of cellulose without purification. See Example 1 and 2 for synthesis of 2-oxo-2-(vinyloxy)ethyl esters. As the process of making 2-oxo-2-(vinyloxy)ethyl ester includes using fatty acids from plant oils, it provides a reagent that is green to produce and adds value to waste products of plant oil refinery.

Cellulose acyl glycolates described in the embodiment examples include acyl groups from renewable fatty acids from plant oils and also different other carboxylic acids bearing variety of functional groups. The acyl groups have been linked to hydroxyl groups of cellulose via glycolic acid linker.

In an embodiment, the reactant mixture further comprises at least one additive selected from: ionic liquid, deep eutectic solvent, an anorganic salt, wherein the additive is present in the range on 0.1 equiv. up to 3 equiv. per one AGU. Cellulose has low solubility in many solvents and therefore it is optional to use additives to increase the solubility of cellulose in some solvents. Traditionally, dissolution of cellulose has been performed using highly toxic solvents, like CS₂ or solvents such as N,N-dimethylacetamide with added LiCl. Ionic liquids provide a greener alternative for dissolution of cellulose for chemical modification. Furthermore, ionic liquids can simultaneously function as basic catalysts. Ionic liquids are highly polar and therefore break the hydrogen bonds formed by cellulose. Ionic liquids can be easily recycled and are considered nontoxic in many cases. There is a dissolution enhancement when ionic liquids are used together with DMSO. Similarly, deep eutectic solvents are good for dissolving cellulose at lower temperatures, allowing to use milder conditions for the production of cellulose acyl glycolates. This is advantageous for minimizing side reactions and improving the selectivity of the acylation process. Furthermore, several deep eutectic solvents are green and sustainable. The at least one additive present in the range on 0.1 equiv. up to 3 equiv. per one AGU.

Adding anorganic salts to the reactant mixture is beneficial for activating hydroxyl groups of cellulose, making them more active and accelerating the reactions. Use of anorganic salts also enhances the solubility of cellulose in certain solvents. The use of anorganic salts can influence the selectivity of the acylation reaction, promoting the desired esterification pathway and minimizing side reactions. This is particularly important for achieving a high degree of substitution with the desired acyl groups.

In an embodiment, the aprotic polar solvent is selected from at least one of: DMSO, DMFA, DMAc, cyrene. Dimethyl sulfoxide (DMSO), N,N-dimethylformamide (DMF), N,N-dimethylacetamide (DMAc), and cyrene are highly polar and facilitate the dissolution of cellulose. Beneficially, they all have relatively high boiling points. This characteristic allows for the use of elevated temperatures during cellulose acylation reactions, promoting faster reaction rates and ensuring that the reaction proceeds efficiently.

In an embodiment, the basic catalyst is selected from at least one of: Cs₂CO₃, K₂CO₃, Na₂CO₃, DBU, DBN. When performing the acylation of cellulose in dipolar aprotic solvent, these basic catalysts are effective. For one, the good solubility ensures homogeneity of the reactant mixture. DBU (1,8-diazabicyclo[5.4.0]undec-7-ene) and DBN (1,5-diazabicyclo[4.3.0]non-5-ene) are organic bases known for their strong basicity. The basic nature of Cs₂CO₃, K₂CO₃, Na₂CO₃, DBU and DBN facilitates the deprotonation of cellulose hydroxyl groups, making them more reactive. Furthermore, these basic catalysts are non-nucleophilic bases and therefore do not participate directly in nucleophilic attack during acylation reactions. This characteristic is beneficial for cellulose acylation, where nucleophilic side reactions are undesirable. Cs₂CO₃, K₂CO₃, Na₂CO₃, DBU and DBN can catalyze the acylation reaction by facilitating the formation of the acylated cellulose ester. The basic environment created by the carbonate ions promotes the reaction between cellulose and reagents. The use of Cs₂CO₃, K₂CO₃, Na₂CO₃, DBU or DBN allows cellulose acylation to be performed under relatively mild reaction conditions, which can be advantageous for minimizing side reactions and obtaining the desired degree of substitution.

In an embodiment, the heating is carried out at a temperature range from 60° C up to 120° C. The temperature may be for example from 60, 70, 80, 90, 100, or 110° C up to 65, 75, 85, 95, 105, or 120° C. The above temperature range allows to strike a balance between achieving a reasonable reaction rate and avoiding excessive side reactions or degradation. In addition, if the temperature is higher than 120° C, then the aprotic polar solvents in the mixture will start to evaporate. If the temperature is too high, there will be unwanted side reaction. On the other side, if the temperature is too low, then the reaction will not proceed efficiently. Furthermore, operating at temperatures in this range can enhance the solubility of both cellulose and components in the reactant mixture and in reaction mixture, promoting better mixing and reaction efficiency. Finally, the technical effect of the above mentioned temperature range is that it helps to maintain the stability of cellulose acyl glycolates in the reaction mixture. Furthermore, for some reactant mixtures and reaction mixtures, variation in the temperature can be used to control the reaction efficiency and yield.

In an embodiment, the 2-oxo-2-(vinyloxy)ethyl ester is dissolved in the aprotic polar solvent. It is beneficial in some cases to dissolve 2-oxo-2-(vinyloxy)ethyl ester in the aprotic polar solvent before adding it into the reactant mixture. This way the added 2-oxo-2-(vinyloxy)ethyl ester is diluted and allows better control over the addition process and provides better homogenization which in turn will allow uniform distribution of the reagent which is good for achieving consistent degrees of substitution across the cellulose chain.

In an embodiment, the first period of time and the second period of time are at least 2 minutes. As the reactions in the reaction mixture are fast, the time can be as short as 2 minutes. Furthermore, for some reactant mixtures and reaction mixtures, variation in the time for the first period of time and the second period of time can be used to control the reaction efficiency and yield. The choice is also dependent on the temperatures used. The technical effect of using different time periods is to achieve high efficiency and yields.

In an embodiment, the cellulose is introduced in a quantity as of one AGU, the basic catalyst is added in a range of none up to 0.05 equiv. per one AGU, the aprotic polar solvent in a range of 1 equiv. up to 21 equiv. per one AGU, the 2-oxo-2-(vinyloxy)ethyl ester is in a range of 1 equiv. up to 4 equiv. per one AGU.

The term "AGU" as used herein refers to anhydroglucose units (AGU). In case of cellulose esterification, quantities of reagents are calculated as per AGU. AGU is a structural unit within the cellulose molecule. Cellulose is a linear polymer composed of repeating units called anhydroglucose units, which are derived from glucose molecules. Each anhydroglucose unit in cellulose consists of a glucose molecule minus one H₂O molecule (hence "anhydro") due to linking together. During cellulose esterification, the hydroxyl groups (-OH) on the AGU are replaced by ester groups through chemical reactions. Understanding the concept of AGU is crucial in cellulose chemistry, especially when discussing the modification of cellulose through processes like esterification. The degree of substitution (DS) is a parameter used to indicate the average number of hydroxyl groups replaced by ester groups per AGU during esterification. DS values of derivatives are generally needed to be between 1 and 3 in order to provide cellulose thermoplasticity or other target functional properties.

Therefore, in the embodiment, the cellulose is introduced in a quantity as of one AGU. The basic catalyst may be for example from 0.01, 0.02, 0.03, or 0.04 equiv. per one AGU up to 0.02, 0.03, 0.04 or 0.05 equiv. per one AGU. The aprotic polar solvent may be for example from 1, 3, 5, 7, 9, 11, 13, 15, 17 or 19 equiv. per one AGU none up to 2, 4, 6, 8, 10, 12, 14, 16, 18 or 21 equiv. per one AGU. The 2-oxo-2-(vinyloxy)ethyl ester may be for example from 1, 2, or 3 equiv. per one AGU up to 1.5, 2.5, 3.5 or 4 equiv. per one AGU.

Cellulose acylation reactions aim for the selective acylation of hydroxyl groups on the cellulose polymer. Low basic catalyst concentrations help control the reaction selectivity by minimizing the extent of deprotonation and ensuring that acylation occurs primarily at the desired hydroxyl positions. Beneficially, this will also help to control the number and extent of side reactions that form undesired by-products. Keeping the basic catalyst concentration low helps to minimize these side reactions, contributing to higher selectivity and purity of the cellulose ester product. Higher basic catalyst concentrations may lead to over-reaction, resulting in a higher degree of substitution (DS) than desired. Maintaining a low basic catalyst concentration allows better control over the extent of the acylation, ensuring that the reaction stops at the desired degree of substitution. In addition, low basic catalyst concentrations can simplify the purification process due to lower amount of impurities and by-products.

Beneficially, the excess of the aprotic polar solvent to maintain a uniform and well-defined environment of the reactant mixture, preventing localized variation of compounds. The excess of aprotic polar solvent can be beneficial for suppressing the side reactions, providing higher yields and purer products. It also helps to control the temperature of the reactant and reaction mixtures.

The 2-oxo-2-(vinyloxy)ethyl ester is added in excess do increase the reaction velocity of the cellulose acyl glycolates production. This reduces reaction times and increases overall efficiency. The use of excess 2-oxo-2-(vinyloxy)ethyl ester contributes to higher yields of the formation of cellulose acyl glycolates. A higher concentration of reactants increases the likelihood of successful collisions between cellulose and the acylating agent, leading to a more efficient conversion of reactants to products. An excess 2-oxo-2-(vinyloxy)ethyl ester in the reaction mixture promotes better accessibility of the reagent to the reactant. Such reaction conditions are crucial for achieving uniform acylation throughout the cellulose polymer, resulting in a more consistent and well-defined product. By using excess of the 2-oxo-2-(vinyloxy)ethyl ester, the utilization of reactant substitution capacity can be maximized, reducing the likelihood of incomplete reactions and increasing the efficiency of the cellulose acylation process.

In an embodiment, process engineering approach is selected from at least of: a reactor-based batch type with mechanical agitation, a reactive extrusion continuous type process. The embodiment syntheses for the initial approval of synthetic concepts have been performed in a reactor, however, the conditions of the synthesis have been suitable for reactive extrusion. Reactive extrusion is able to provide high yield and desired degree and pattern of substitution in shorter time, with minimum usage of solvents and reagents. Reactive extrusion allows to work at high cellulose concentrations despite the fact that the reaction mixture becomes very viscous. Under such conditions, use of reactor-based methods is very complicated.

In an embodiment, a 2-oxo-2-(vinyloxy)ethyl ester is produced using a carboxylic acid, wherein the carboxylic acid is selected from at least one of: a mixture of carboxylic acids obtained from rapeseed oil, a mixture of carboxylic acids obtained from plant oil, alkanoic carboxylic acids comprising carbon chain length from C3 up to C24, unsaturated fatty acids comprising carbon chain length from C5 up to C24, polyunsaturated fatty acids comprising carbon chain length from C5 up to C24, bile acids, hydroxycarboxylic acids, ketocarboxylic acids, a benzoic acid, substituted aromatic carboxylic acids, dicarboxylic acids. The mixture of carboxylic acids obtained by hydrolysis of plant oils as well as by-products (wastes) of their industrial refining may be considered as equivalent to plant oil starting material for esterification of cellulose. The method employs a 2-oxo-2-(vinyloxy)ethyl ester produced from diverse range of carboxylic acids. This flexibility offered by this method allows for the utilization of various carboxylic acids, each possessing distinct chemical properties. Furthermore, this allows to vary the raw materials used for the preparation of the 2-oxo-2-(vinyloxy)ethyl ester. The use of different carboxylic acids enables the fine-tuning of 2-oxo-2-(vinyloxy)ethyl ester properties. The resulting esters can be optimized for specific applications, such as improved solubility, stability, or compatibility with processes, addressing diverse industry needs. The broad scope of carboxylic acids contributes to the sustainability of the process. Utilizing diverse carboxylic acids, including renewable feedstocks, aligns with green chemistry principles, promoting environmentally conscious and sustainable manufacturing practices.

In an embodiment, the cellulose acyl glycolates obtained by a present disclosure, wherein the acyl groups are linked to cellulose hydroxyl groups via glycolic acid moiety.

In an embodiment, cellulose acyl glycolates have a following molecular structure: 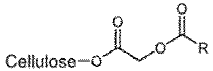 wherein an acyl group R is selected from at least one of: a carboxylic acid, a mixture of carboxylic acids obtained from rapeseed oil, a mixture of carboxylic acids obtained from plant oil, alkanoic carboxylic acids comprising carbon chain length from C3 up to C24, unsaturated fatty acids comprising carbon chain length from C5 up to C24, polyunsaturated fatty acids comprising carbon chain length from C5 up to C24, bile acids, hydroxycarboxylic acids, ketocarboxylic acids, a benzoic acid, substituted aromatic carboxylic acids, dicarboxylic acids.

In an embodiment, cellulose acyl glycolates have a following molecular structure: 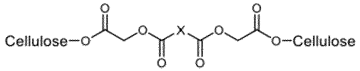 wherein X is at least one of selected from: substituted saturated alkylene, substituted unsaturated alkylene, unsubstituted saturated alkylene, unsubstituted unsaturated alkylene, phenylene, substituted phenylene.

### EXAMPLES

### Example 1. Synthesis of reagents.

The synthesis of the reagents (2a-2g) occurs under base catalysis using N,N-diisopropylethyl amine (DIPEA) in acetonitrile mixed with a suitable cosolvent (mainly EtOAc; toluene was used for palmitic acid) to afford the product in near quantitative yield for aliphatic and unsaturated fatty acids (incl. the mixture of the carboxylic acids hydrolyzed from rapeseed oil) as well as for benzoic and substituted benzoic acids (see Table 1).

The procedure: Carboxylic acid is dissolved in a solvent mixture consisting of acetonitrile and a cosolvent; DIPEA is added followed by vinyl chloroacetate; the mixture is heated on stirring at 60° C overnight (12-16 hours); the solvents are evaporated and residue dissolved in EtOAc, washed with sodium bicarbonate and saturated brine, dried and evaporated.

**Table 1. Experimental examples of synthesis of the acylation reagents, 2-oxo-2-(vinyloxy)ethyl esters (2a-2g) of monocarboxylic acids (5a-5g).**

| 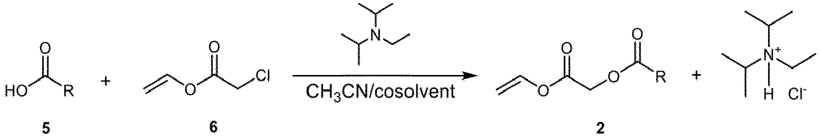 | | | |
|---|---|---|---|
| 5a | R = corresponds to carboxylic acids from rapeseed (canola) oil | | 2a |
| 5b | 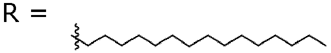 | palmitic acid | 2b |
| 5c | 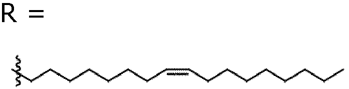 | oleic acid | 2c |
| 5d | 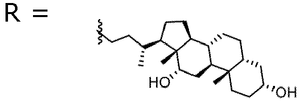 | deoxycholic acid | 2d |
| 5e | 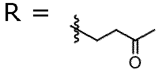 | levulinic acid | 2e |
| 5f | 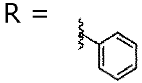 | benzoic acid | 2f |
| 5g | 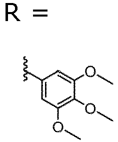 | 3,4,5-tris-methoxybenzoic acid | 2g |

### Materials and general methods

Chemicals and solvents were purchased from Sigma-Aldrich and TCI. ¹H and ¹³C NMR spectra were recorded in CDCl₃ solutions on 800 or 400 MHz Bruker Avance spectrometers. All signals were referenced relative to the residual solvent signal. 2D FT methods were used for the full assignment of NMR spectra. Thin layer chromatography (TLC) was performed using DC-Alufolien Kieselgel 60 F254 (Merck) silica gel plates and stains were visualized by heating with anisaldehyde solution (3 mL of anisaldehyde, 10 mL of conc. H₂SO₄ in 90 mL of EtOH) or under UV light. *1. The synthesis of 2-oxo-2-(vinyloxy)ethyl oleate.*

Oleic acid (1.977 g; 2.23 mL; 7 mmol) was dissolved in ethyl acetate (15 mL). Acetonitrile (15 mL) was added on stirring followed by N,N-diisopropylethylamine (1.29 g; 1.74 mL; 10 mmol) and vinyl chloroacetate (0.820 g; 0.69 mL; 6.8 mmol). The mixture was stirred on magnetic stirrer at 60° C for 16 hours. The solvents were evaporated on rotary evaporator. The residual material was dissolved in ethyl acetate (70 mL). The solution was washed with NaHCO₃ solution (2x15 mL; 0.5M) and with saturated brine (2x15 mL) and dried over anhydrous Na₂SO₄. After filtering and evaporation of the solvent almost homogeneous target compound was gained (2.323 g; yield: 93.2%).

Characterization of 2-oxo-2-(vinyloxy)ethyl oleate. TLC: R_{f} = 0.27 (Eluent: PE/EtOAc 10/0.3). ¹³C NMR (201 MHz, CDCl₃) δ: 172.98 (C-1), 165.15 (C-g1), 140.51 (C-v1), 129.98 (C-10), 129.71 (C-9), 98.94 (C-v2), 59.99 (C-g2), 33.71 (C-2), 31.88 (C-16), 29.74 (C-12), 29.66 (C-7), 29.50 (C-14), 29.30 (C-13), 29.29 (C-15), 29.11 (C-5), 29.05 (C-6), 28.97 (C-4), 27.19 (C-11), 27.14 (C-8), 24.77 (C-3), 22.66 (C-17), 14.08 (C-18).

### 2. The synthesis of the mixture of 2-oxo-2-(vinyloxy)ethyl esters of carboxylic acids obtained by hydrolysis of rapeseed (canola) oil.

The mixture of carboxylic acids (theoretically estimated M=282) (8 mmol; 2.256 g) was dissolved in ethyl acetate (15 mL). Acetonitrile (15 mL) was added on stirring followed by N,N-diisopropylethylamine (12 mmol; 1.554 g; 2.10 mL) and vinyl chloroacetate (7.8 mmol; 940 mg; 0.79 mL). The mixture was stirred on magnetic stirrer at 60° C for 16 hours. The solvents were evaporated on rotary evaporator. The residual material was dissolved in ethyl acetate (70 mL). The solution was washed with NaHCOs solution (4x20 mL; 0.5 M) and with saturated brine (2x20 mL) and dried over anhydrous Na₂SO₄. After filtering and evaporation of the solvent target compound (theoretically estimated M = 366) was gained (7.384 mmol; 2.703 g; yield: 92.3%).

Characterization of the product. TLC: R_{f} = 0.27 (eluent: PE/EtOAc 10/0.3). ¹³C NMR (201 MHz, CDCl₃) δ: 173 (C-1), 165 (C-gl1), 140.5 (C-v1), 131.91 (C-Ln16), 130.22 (C-Ln9), 130.17 (C-L13), 129.99 (C-L9), 129.97 (C-Oleic10), 129.70 (C-Oleic9), 128.25 (C-Ln12), 128.21 (C-Ln13), 128.02 (C-L10), 127.88 (C-L12), 127.70 (C-Ln10), 127.08 (C-Ln15), 99 (C-v2), 60 (C-gl2), 33.70 (C-3), 32-22 (C-alkyl chains), 14.23/14.08/14.07/14.06/14.03 (C-18/or other terminal methyl).

### 3. The synthesis of 2-oxo-2-(vinyloxy)ethyl levulinate.

Levulinic acid (10 mmol; 1.161 g; 1.024 mL) was dissolved in acetonitrile (15 mL). Ethyl acetate (15 mL) was added on stirring followed by N,N-diisopropylethylamine (15 mmol; 1.943 g; 2.62 mL) and vinyl chloroacetate (9.5 mmol; 0.96 mL; 1.145 g). The mixture was stirred on magnetic stirrer at 60° C for 16 hours. The solvents were evaporated on rotary evaporator. The residual material was dissolved in ethyl acetate (70 mL), the solution was washed with NaHCOs solution (2x15 mL; 0.5 M) and with saturated brine (2x15 mL) and dried over anhydrous Na₂SO₄. After filtering and evaporation of the solvent the target compound was gained (1.710 g; 8.541 mmol; yield: 89.9%).

Characterization of 2-oxo-2-(vinyloxy)ethyl levulinate. TLC: R_{f} = 0.20 (eluent: PE/EtOAc 10/2).¹³C NMR (201 MHz, CDCl₃) δ: 206.14 (C-4), 172.03 (C-1), 164.97 (C-g1), 140.42 (C-v1), 99.06 (C-v2), 60.26 (C-g2), 37.74 (C-3), 29.75 (C-5), 27.48 (C-2).

### 4. The synthesis of 2-oxo-2-(vinyloxy)ethyl benzoate.

Benzoic acid (1.221 g; 10 mmol) was dissolved in acetonitrile (15 mL). Ethyl acetate (15 mL) was added on stirring followed by N,N-diisopropylethylamine (1.943 g; 2.6 mL; 15 mmol) and vinyl chloroacetate (1.145 g; 0.96 mL, 9.5 mmol). The mixture was stirred on magnetic stirrer at 60° C for 16 hours. The solvents were evaporated on rotary evaporator. The residual material was dissolved in ethyl acetate (60 mL), the solution was washed with NaHCO₃ solution (2x15 mL; 0.5 M) and with saturated brine (2x15 mL) and dried over anhydrous Na₂SO₄. After filtering and evaporation of the solvents almost homogeneous target compound was gained (1.835 g; yield: 93.7%) which was used for derivatization of cellulose without purification.

Characterization of 2-oxo-2-(vinyloxy)ethyl benzoate. TLC: R_{f} = 0.19 (PE/EtOAc 10/0.3). ¹³C NMR (201 MHz, CDCl₃) δ: 165.80 (C-1), 165.05 (C-g1), 140.52 (C-v1), 133.54 (C-5), 129.94 (C-3/C-7), 128.92 (C-2), 128.47 (C-4/C-6), 99.06 (C-v2), 60.60 (C-g2).

### 5. The synthesis of di-[2-oxo-2-(vinyloxy)ethyl] suberate.

Suberic acid (1.742 g; 10 mmol) was dissolved in acetonitrile (15 mL). Ethyl acetate (15 mL) was added on stirring followed by N,N-diisopropylethylamine (30 mmol; 5.24 mL; 3.886 g) and vinyl chloroacetate (2.411 g; 2.022 mL; 20 mmol). The mixture was stirred on magnetic stirrer at 60° C for 16 hours. The solvents were evaporated on rotary evaporator. The residual material was dissolved in ethyl acetate (70 mL), the solution was washed with NaHCOs solution (2x15 mL; 0.5 M) and with saturated brine (2x15 mL) and dried over anhydrous Na₂SO₄. After filtering and evaporation of the solvent almost homogeneous target compound was gained (2.880 g; yield: 84.1%).

Characterization of di-[2-oxo-2-(vinyloxy)ethyl] suberate. TLC: R_{f} = 0.15 (Eluent: PE/EtOAc 10/1); R_{f} = 0.42 (Eluent: PE/EtOAc 10/2). ¹³C NMR (201 MHz, CDCl₃) δ: 172.83 (C-1), 165.12 (C-g2), 140.49 (C-v1), 98.77 (C-v2), 60.00 (C-g2), 33.55 (C-2), 28.51 (C-4), 24.50 (C-3).

### Example 2. Synthesis of cellulose acyl glycolates.

Acylation of cellulose is performed in the mixture of DMSO and 1-ethyl-3-methylimidazolium acetate (3/1-6/1 v/v) at 90-95 °C during 5-10 minutes under base catalysis by ionic liquid or by combined catalytic system consisting of EmimOAc and carbonate of an alkali metal, the difference was observed in technical aspect regarding work-up simplicity, which was preferable for combined catalyst system. Both of the paths are readily feasible, the option depends mainly on the technological preferences. The degree of substitution of the products ranges between 1.0 and 2.5, for the products (1a-including long-chain fatty acyls DSs were 1.8-2.2).

### Example 3. The procedure for acylating of cellulose with 2-oxo-2-(vinyloxy)ethyl esters.

The approach allows to link via glycolic acid linker to cellulose acyl moieties from the carboxylic acids of different structure affording the products (1a-1g) and (10) (Table 1 and Formulae 2): the native mixture of carboxylic acids hydrolyzed from rapeseed oil (mainly consisting of mono- and polyunsaturated fatty acids, (1a); aliphatic fatty acids (example: including palmitic acid (1b)); unsaturated fatty acids (example: incl. oleic acid (1c)); hydroxy fatty acids (example: incl. deoxycholic acid (1d)); ketocarboxylic acids (example: incl. levulinic acid (1e)); benzoic acid (example: incl. benzoic acid (1f)) and substituted benzoic acid 3,4,5-trimethoxybenzoic acid (1g)) and finally, dicarboxylic acids (example: incl. suberic acid (10)).

**Table 2. Experimental examples of the acylation of cellulose with 2-oxo-2-(vinyloxy)ethyl esters of monocarboxylic acids (2a-2g) to afford cellulose acyl glycolates (1a-1g).**

| 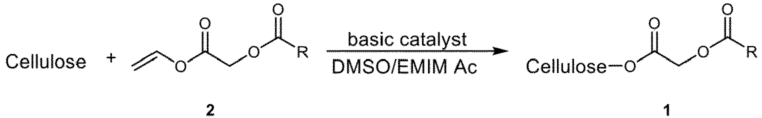 | | |
|---|---|---|
| 2a | R = corresponds to carboxylic acids from rapeseed (canola) oil | 1a |
| 2b | 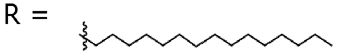 | 1b |
| 2c | 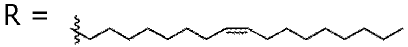 | 1c |
| 2d | 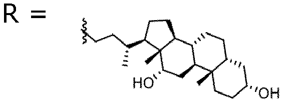 | 1d |
| 2e | 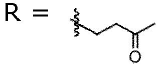 | 1e |
| 2f | 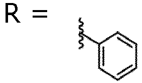 | 1f |
| 2g | 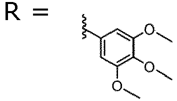 | 1g |

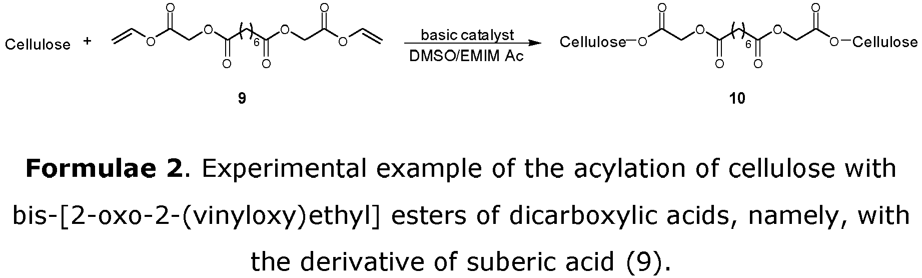

### General methods, chemicals and solvents.

¹³C MAS NMR spectra of solid cellulose esters were recorded on Bruker AVANCE-II spectrometer at 14.1 T magnetic field using home built MAS probe for 25 x 4 mm Si₃N₄ rotors. In all experiments the sample spinning was 12.5 kHz. Two different NMR spectra were recorded: i) for every compound the CP NMR spectrum is obtained by the pulse sequence where after H/C cross polarization (CP) with a constant ¹³C pulse and ramped ¹H pulse the acquisition is followed in the presence of high field proton decoupling; ii) in some cases, where CP for the dynamic fragments in the molecule is not effective, the spectrum is recorded with direct excitation by one ~90-degree pulse (4.5 µs) followed by acquisition in the presence of high field proton decoupling. The peak intensities were normalized to the sample weight and the number of scans.

Reagents, solvents, and catalysts were purchased from Sigma-Aldrich and TCI; petroleum ether (PE), boiling between 40-60° C was used. Cellulose was purchased from Thermo Fisher Scientific (Cellulose microcrystalline, average particle size 50 µm; DP=200; Catalog No. 387240050; LOT: A0443067).

### 1. Acylation of cellulose with 2-oxo-2-(vinyloxy)ethyl oleate.

Four components of the synthesis were introduced into a flask: cellulose (162 mg; 1 mmol/AGU), Cs₂CO₃ (50 mg; 0.15 mmol), DMSO (3 mL) and 1-ethyl-3-methylimidazolium acetate (0.9 mL; 0.99 g; 5.8 mmol). The mixture was heated at 95° C on magnetic stirring for ten minutes; afterwards, acyl donor 2-oxo-2-(vinyloxy)ethyl oleate (1.110; 3.03 mmol) was added and stirring of the mixture at 95° C was continued for ten minutes. Then the reactor was removed from the oil bath and water (15 mL) was added. Polymer precipitated from the solution and therefore mixing of the heterogeneous mixture was assisted using a lab spoon while it was poured onto a glass filter (P3). The formed solid polymer was thoroughly mechanically disintegrated and washed three times with water (3x15 mL). Thereafter, the product was washed three times with ethanol (3x10 mL) and once with petroleum ether (1x15 mL). The product was dried under reduced pressure (6-7 mm Hg) until constant weight was reached (749 mg; Δm = 749-162 = 587 mg; estimated DS^{gravimetric} = 587/322.54 = 1.82).

Characterization of the product: IR (cm⁻¹; film) 571, 725 (strong), 1057 (str.), 1157 (str.), 1273, 1381, 1420, 1458, 1743.65 (str.), 2855 (str.), 2924 (str.), 3001, 3487. ¹³C MAS NMR δ: 172.6 (C-1), 167.6 (C-gl1), 130.2 (C-9,10), 104.3/101.4 (C-AGU1), 83.5 (C-AGU4), 72.9 (C-AGU2,AGU3,AGU5), 61.0 (C-gl2,AGU6), 34.2 (C-2), 32.6 (C-16), 31.2-29.0 (8C; C-4,5,6,7,12,13,14,15), 27.8 (C-8,11), 25.4 (C-3), 23.3 (C-17), 14.6 (C-18).

### 2. Acylation of cellulose with acyl donor - a mixture of the 2-oxo-2-(vinyloxy)ethyl esters of the carboxylic acids hydrolyzed from rapeseed (Canola) oil.

Four components of the synthesis were introduced into a flask: microcrystalline cellulose (MCC) (324 mg; 2.0 mmol AGU), Cs₂CO₃ (50 mg; 0.15 mmol), DMSO (3 mL) and ionic liquid 1-ethyl-3-methylimidazolium acetate (0.9 mL; 0.99 g; 5.8 mmol). The mixture was heated at 95° C on magnetic stirring for 10 minutes. Acyl donor (2.5 mL; ca 6 mmol) was added dropwise and stirring of the mixture at 95° C was continued for additional 10 minutes. Then the reactor was removed from the oil bath and water (15 mL) was added. Stirring/mixing of the heterogeneous mixture was assisted with a lab spoon and all the mixture was transferred onto a glass filter (P3). The solid polymer was thoroughly mechanically disintegrated on the filter and washed aided with a lab spoon. Washing of the product with water in above manner was repeated twice (2x15 mL), followed by washing three times with ethanol (3x15 mL). Finally, the product was washed with petroleum ether (1x15 mL).

The product was dried under reduced pressure (6-7 mm Hg) until constant weight was reached. 1.598 g of the product was gained (Δm = 1.598-0.324 = 1.274 g; 1.274/2(AGUs) = 0.637g; estimated DS^{(gravimetric)} = 0.637/322.5 = 1.97).

Characterization of the product: IR (cm⁻¹; film) 571, 718, 910, 1057 (str.), 1157 (str.), 1273, 1381 (specific to linker), 1420 (sp. to I.), 1458, 1612, 1743.65 (str.), 2855 (str.), 2924 (str.), 3009, 3410. ¹³C MAS NMR δ: 172.9 (C-1), 167.6 (C-gl1), 132.1 (C-Ln16), 130.2 (C-Ln16,Ln9,L13,L9,Oleic10,Oleic9), 128.6 (C-Ln12,Ln13,L10,L12), 127.7 (C-Ln10,Ln15), 104.3/101.2 (C-AGU1), 84.0 (C-AGU4), 72.7 (C-AGU2,AGU3,AGU5), 61.0 (C-gl2,AGU6), 34.2 (C-Oleic2, etc.), 32.6 (C-Oleic16, etc.), 32.6-26.2 (C of alkyl chains), 25.4 (C-3), 23.3 (C-17), 14.4 (C-18 and other terminal CH₃).

### 3. Acylation of cellulose with 2-oxo-2-(vinyloxy)ethyl levulinate.

Four components of the synthesis were introduced into a flask: cellulose (324 mg; 2 mmol-AGU), Cs₂CO₃ (50 mg; 0.15 mmol), DMSO (3 mL) and 1-ethyl-3-methylimidazolium acetate (0.9 mL; 0.99 g; 5.8 mmol). The mixture was heated at 95° C on magnetic stirring for ten minutes; afterwards, acyl donor 2-oxo-2-(vinyloxy)ethyl levulinate (1.232 g; 6.15 mmol) was added and stirring of the mixture at 95° C was continued for ten minutes. The reactor was removed from the oil bath and water (15 mL) was added. Polymer precipitated, therefore mixing of the heterogeneous system was assisted with a lab spoon while it was poured onto a glass filter (P3). The solid polymer was thoroughly mechanically disintegrated and washed two more times with water (all together - 3x15 mL). Thereafter, the product was washed three times with ethanol (3x15 mL) and once with petroleum ether (1x15 mL). The product was dried under reduced pressure (6-7 mm Hg) until constant weight was reached (0.783 g; Δm = 0.783 - 0.324 = 0.459 g; estimated DS^{gravimetric} = (459/2 = 230), 230/156.1 = 1.47.

Characterization of the product: IR (cm⁻¹; film) 571, 918, 1042 (str.), 1150 (str.), 1279, 1366, 1420, 1712.79 (str.), 1743.65 (str.), 2924, 3456; ¹³C MAS NMR δ: 208.6 (C-4), 173.1 (C-1), 168.2 (C-gl1), 101.2 (C-AGU1), 72.6 (C-AGUs), 61.4 (C-gl2,AGU6), 38.1 (C-3), 29.8 (C-5), 28.1 (C-2).

### 4. Acylation of cellulose with 2-oxo-2-(vinyloxy)ethyl benzoate.

Four components of the synthesis were introduced into a flask: cellulose (324 mg; 2 mmol-AGU), Cs₂CO₃ (50 mg; 0.15 mmol), DMSO (3 mL) and 1-ethyl-3-methylimidazolium acetate (0.9 mL; 0.99 g; 5.8 mmol). The mixture was heated at 95° C on magnetic stirring for ten minutes; afterwards, acyl donor 2-oxo-2-(vinyloxy)ethyl benzoate (1.246 g; 6.04 mmol) was added and stirring of the mixture at 95° C was continued for ten minutes. Then the reactor was removed from the oil bath and water (15 mL) was added. Polymer precipitated from the viscous solution, therefore mixing of the heterogeneous system was assisted with a lab spoon while it was transferred onto a glass filter (P3). Solid polymer was thoroughly mechanically disintegrated and washed two more times with water (all together 3x15 mL). Thereafter, the product was washed three times with ethanol (3x15 mL) and once with petroleum ether (1x15 mL). The product was dried under reduced pressure (6-7 mm Hg) until constant weight was reached (0.798 g; Δm = 0.798 - 0.324 = 0.474 g; estimated DS^{gravimetric} = (474/2 = 237), 237/162 = 1.46.

Characterization of the product: IR (cm⁻¹; film) 710 (str.), 822, 1030 (str.), 1069, 1111 (str.), 1177, 1200 (str.), 1277, 1385 (specific to linker), 1420 (sp. to l.), 1454, 1601, 1720.5 (str.), 1759 (str.), 2878, 2947, 3063, 3507; ¹³C MAS NMR δ: 167.3 (C-1,gl1), 133.2/129.5 (6C, C-2,3,4,5,6,7), 101.6 (C-AGU1), 83.8 (C-AGU4), 73.0 (C-AGU2,AGU3,AGU5), 61.7 (C-gl2,AGU6).

### 5. Acylation of cellulose with bis-[2-oxo-2-(vinyloxy)ethyl] suberate.

Four components of the synthesis were introduced into a flask: cellulose (162 mg; 1 mmol/AGU), Cs₂CO₃ (50 mg; 0.15 mmol), DMSO (3 mL) and 1-ethyl-3-methylimidazolium acetate (0.9 mL; 0.99 g; 5.8 mmol). The mixture was heated at 95° C on magnetic stirring for ten minutes; afterwards, acyl donor bis-[2-oxo-2-(vinyloxy)ethyl suberate (1.032 g; 3.01 mmol) was added and stirring of the mixture at 95° C was continued for ten minutes. The reactor was removed from the oil bath and water (10 mL) was added. Polymer precipitated from the solution and the heterogeneous mixture was poured onto a glass filter (P3). The solid polymeric product was thoroughly mechanically disintegrated and washed two more times with water (all together - 3x10 mL). Thereafter, the product was washed three times with ethanol (3x10 mL). Finally, the product was washed with petroleum ether (1x10 mL). The product was dried under reduced pressure (6-7 mm Hg) until constant weight was reached (616 mg; Δm = 616-162 = 454 mg; estimated DS^{gravimetric} >1.77 (the cut-off value corresponds to the binding via one end).

Characterization of the product: IR (cm⁻¹; film) 725, 1049 (str.), 1150 (str.), 1273, 1381, 1420, 1535, 1605, 1735.93 (str.), 2862, 2940; ¹³C MAS NMR δ: 173.6 (C-1), 168.0 (C-gl1), 100.7 (C-AGU1), 72.7 (C-AGUs), 61.2 (C-gl2,AGU6), 34.0 (C-2), 29.1 (C-4), 25.1 (C-3).

## Claims

1. A method for producing cellulose acyl glycolates, the method comprising:
- combining cellulose as a reactant, a basic catalyst and an aprotic polar solvent to form a reactant mixture;
- stirring and heating the reactant mixture for a first period of time;
- adding a 2-oxo-2-(vinyloxy)ethyl ester as a reagent to the stirred and heated reactant mixture to form a reaction mixture;
- stirring and heating the reaction mixture for a second period of time for formation of cellulose acyl glycolates.

2. A method according to claim 1, wherein the reactant mixture further comprises at least one additive selected from: ionic liquid, deep eutectic solvent, an anorganic salt, wherein the additive is present in the range on 0.1 equiv. up to 3 equiv. per one AGU.

3. A method according to claims 1 or 2, wherein the aprotic polar solvent is selected from at least one of: DMSO, DMFA, DMAc, cyrene.

4. A method according to any of the preceding claims, wherein the basic catalyst is selected from at least one of: Cs₂CO₃, K₂CO₃, Na₂CO₃, DBU, DBN.

5. A method according to any of the preceding claims, wherein the heating is carried out at a temperature range from 60° C up to 120° C.

6. A method according to any of the preceding claims, wherein the 2-oxo-2-(vinyloxy)ethyl ester is dissolved in the aprotic polar solvent.

7. A method according to any of the preceding claims, wherein the first period of time and the second period of time are at least 2 minutes.

8. A method according to any of the preceding claims, wherein
- the cellulose is introduced in a quantity as of one AGU,
- the basic catalyst is added in a range of 0.01 equiv. up to 0.05 equiv. per one AGU,
- the aprotic polar solvent in a range of 1 equiv. up to 21 equiv. per one AGU,
- the 2-oxo-2-(vinyloxy)ethyl ester is in a range of 1 equiv. up to 4 equiv. per one AGU.

9. A method according to any of the preceding claims wherein process engineering approach is selected from at least of: a reactor-based batch type with mechanical agitation, a reactive extrusion continuous type process.

10. A method according to any of the preceding claims, wherein the 2-oxo-2-(vinyloxy)ethyl ester is produced using a carboxylic acid, wherein the carboxylic acid is selected from at least one of: a mixture of carboxylic acids obtained from rapeseed oil, a mixture of carboxylic acids obtained from plant oil, alkanoic carboxylic acids comprising carbon chain length from C3 up to C24, unsaturated fatty acids comprising carbon chain length from C5 up to C24, polyunsaturated fatty acids comprising carbon chain length from C5 up to C24, bile acids, hydroxycarboxylic acids, ketocarboxylic acids, a benzoic acid, substituted aromatic carboxylic acids, dicarboxylic acids.

11. The cellulose acyl glycolates obtained by a method according to any of the claims 1-10 wherein the acyl groups are linked to cellulose hydroxyl groups via glycolic acid moiety.

12. Cellulose acyl glycolates, wherein the acyl groups are linked to cellulose hydroxyl groups via glycolic acid moiety.

13. Cellulose acyl glycolates according to claim 12, wherein cellulose acyl glycolates have a following molecular structure: 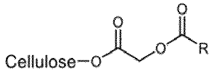 wherein an acyl group R is selected from at least one of: a carboxylic acid, a mixture of carboxylic acids obtained from rapeseed oil, a mixture of carboxylic acids obtained from plant oil, alkanoic carboxylic acids comprising carbon chain length from C3 up to C24, unsaturated fatty acids comprising carbon chain length from C5 up to C24, polyunsaturated fatty acids comprising carbon chain length from C5 up to C24, bile acids, hydroxycarboxylic acids, ketocarboxylic acids, a benzoic acid, substituted aromatic carboxylic acids, dicarboxylic acids.

14. Cellulose acyl glycolates according to claim 12, wherein cellulose acyl glycolates have a following molecular structure: 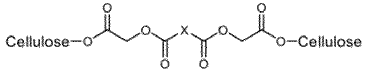 wherein X is at least one of selected from: substituted saturated alkylene, substituted unsaturated alkylene, unsubstituted saturated alkylene, unsubstituted unsaturated alkylene, phenylene, substituted phenylene.
